# EUROPEAN PATENT APPLICATION

(11) **EP 4 506 805 A1**
(43) Date of publication of application: **12.02.2025**
(21) Application number: 24167030.6
(22) Date of filing: 27.03.2024
(51) Int. Cl.: G06F 3/0488, G06F 3/04883

(54) **METHOD AND DEVICE FOR CONTROLLING APPLICATION, ELECTRONIC DEVICE AND MEDIUM**

(30) Priority: 10.08.2023 CN 202311009067
(71) Applicant: Beijing Xiaomi Mobile Software Co., Ltd., Beijing 100085 (CN)
(72) Inventor: GUO, Hu, Beijing, 100085 (CN)
(74) Representative: Dehns Germany Partnerschaft mbB

(57) **Abstract**

The present disclosure relates to a method and device for controlling an application, an electronic device and a medium. The method for controlling the application in the present disclosure determines touch point information based on a touch instruction; and based on the touch point information, switches a display state of the application from a small window mode to a first mode of which display window is larger than that of the small window mode, or from the first mode to the small window mode. By vividly establishing a correlation between the motion state of the touch operation of the user's finger and the display state of the application, it is convenient for the user to operate and the user's learning cost is reduced. Since the manner to enter the small window mode and the first mode is simpler, it conforms to the user's operation intuition, improves the usage experience of the user, and an interaction between the electronic device and the user is better.

## Description

### TECHNICAL FIELD

The present disclosure relates to the technical field of electronic devices, and in particular, to a method and device for controlling an application, an electronic device and a medium.

### BACKGROUND

Displaying applications in small windows is a new form of multi-task operation, which achieves a purpose of multi-task collaboration by shrinking the applications onto other application interfaces. At present, ways for the applications to enter a small window mode or a full screen mode have been introduced, but operations of the ways are complicated and not intuitive enough, which are not conducive to user operations.

### SUMMARY

In order to overcome problems existing in the related arts, the present disclosure provides a method and device for controlling an application, an electronic device and a medium.

According to a first aspect of embodiments of the present disclosure, there is provided a method for controlling an application, which is applied to an electronic device. The method for controlling the application includes:
determining touch point information based on a touch instruction, wherein the touch point information includes the number of touch points and motion information of each touch point, and the motion information of the touch point is configured to characterize a motion state of the touch point; and
switching a display state of the application to a second display state based on a current first display state of the application and the touch point information, wherein a first one of the first display state and the second display state is a small window mode, and a second one of the first display state and the second display state is a first mode, and a display window of the first mode is larger than a display window of the small window mode.

In some embodiments of the present disclosure, the switching the display state of the application to the second display state based on the current first display state of the application and the touch point information includes:
switching the display state of the application to the small window mode in a case that a current display state of the application is the first mode, the number of touch points satisfies a preset number and a motion direction of each touch point indicates that the touch point is in an inward retraction motion.

In some embodiments of the present disclosure, the number of touch points satisfying the preset number and the motion direction of each touch point indicating that the touch point is in the inward retraction motion include:
the number of touch points is two, the touch points include a first touch point and a second touch point, the first touch point has a first starting position and a first target position during motion, and the second touch point has a second starting position and a second target position during the motion; and
the touch point is in the inward retraction motion in a case that the following conditions are satisfied:
   a first condition of an included angle between an extension line of a connection between the first starting position and the first target position and an extension line of a connection between the second starting position and the second target position being greater than a first preset angle; and
   a second condition of a product of a difference along a reference direction between the first target position and the first starting position and a difference along the reference direction between the second target position and the second starting position being negative, and a distance between the first starting position and the second starting position being greater than a distance between the first target position and the second target position, wherein the reference direction is a horizontal direction or a vertical direction of the electronic device.

In some embodiments of the present disclosure, the number of touch points satisfying the preset number and the motion direction of each touch point indicating that the touch point is in the inward retraction motion include:
the number of touch points is three, and the touch point is in the inward retraction motion in a case that the following conditions are satisfied:
a third condition of existence of an included angle greater than a second preset angle among a plurality of included angles formed by intersection of motion directions of any two touch points; and
a fourth condition of a distance between starting positions of any two touch points being greater than a distance between target positions of the two touch points during motion.

In some embodiments of the present disclosure, the method for controlling the application further includes:
adjusting a size of the display window of the small window mode according to a motion position of the touch point, after the display state of the application is switched to the small window mode.

In some embodiments of the present disclosure, the switching the display state of the application to the second display state based on the current first display state of the application and the touch point information includes:
switching the display state of the application to the first mode in a case that a current display state of the application is the small window mode, the number of touch points satisfies a preset number and a motion direction of each touch point indicates that the touch point is in an outward expansion motion.

In some embodiments of the present disclosure, the number of touch points satisfying the preset number and the motion direction of each touch point indicating that the touch point is in the outward expansion motion include:
the number of touch points is two, the touch points include a first touch point and a second touch point, the first touch point has a first starting position and a first target position during motion, and the second touch point has a second starting position and a second target position during the motion; and
the touch point is in the outward expansion motion in a case that the following conditions are satisfied:
a fifth condition of an included angle between an extension line of a connection between the first starting position and the first target position and an extension line of a connection between the second starting position and the second target position being greater than a third preset angle; and
a sixth condition of a product of a difference along a reference direction between the first target position and the first starting position and a difference along the reference direction between the second target position and the second starting position being negative, and a distance between the first starting position and the second starting position being smaller than a distance between the first target position and the second target position, wherein the reference direction is a horizontal direction or a vertical direction of the electronic device.

In some embodiments of the present disclosure, the number of touch points satisfying the preset number and the motion direction of each touch point indicating that the touch point is in the outward expansion motion include:
the number of touch points is three, and the touch point is in the outward expansion motion in a case that the following conditions are satisfied:
a seventh condition of existence of an included angle greater than a fourth preset angle among a plurality of included angles formed by intersection of motion directions of any two touch points; and
an eighth condition of a distance between starting positions of any two touch points being smaller than a distance between target positions of the two touch points during motion.

According to a second aspect of the embodiment of the present disclosure, there is provided a device for controlling an application, which is applied to an electronic device. The device for controlling the application includes:
a determination module, configured to determine touch point information based on a touch instruction, wherein the touch point information includes the number of touch points and motion information of each touch point, and the motion information of the touch point is configured to characterize a motion state of the touch point; and
a processing module, configured to switch a display state of the application to a second display state based on a current first display state of the application and the touch point information, wherein one of the first display state and the second display state is a small window mode, and the other is a first mode, and a display window of the first mode is larger than a display window of the small window mode.

According to a third aspect of embodiments of the present disclosure, there is provided an electronic device, including:
a processor; and
a memory configured to store executable instructions by the processor;
wherein the processor is configured to execute the executable instructions in the memory to implement the method for controlling the application provided by the first aspect of the present disclosure.

According to a fourth aspect of an embodiment of the present disclosure, there is provided a non-transitory computer-readable storage medium having executable instructions stored thereon which, when executed by a processor of an electronic device, cause the electronic device to perform the method for controlling the application according to the first aspect.

Adopting the above methods of the present disclosure has the following beneficial effects: the present disclosure determines the touch point information based on the touch instruction; and based on the touch point information, completes the switching of the application from the small window mode to the first mode of which the display window is larger than that of the small window mode, or from the first mode to the small window mode. Since the touch point information represents that the touch point is in the inward retraction motion or outward expansion motion, the inward retraction motion of the touch point can be vividly associated with the display window becoming smaller, and the outward expansion motion of the touch point can be vividly associated with the display window becoming larger. By associating the motion manner of the touch point with the switching process of the display state of the application, the user's learning cost is reduced, and it is convenient for the user to adjust the display state of the application intuitively and quickly. Moreover, since the manner to enter the small window mode and the first mode is simple, it conforms to the user's operation intuition, enhances an interaction effect between the user and the electronic device, and improves the usage experience of the user.

It should be understood that the above general description and the following detailed description are exemplary and explanatory only, and are not intended to limit the present disclosure.

### BRIEF DESCRIPTION OF THE DRAWINGS

The accompanying drawings, which are incorporated in and constitute a part of the specification, illustrate embodiments consistent with the present disclosure and together with the specification, serve to explain principles of the present disclosure.
FIG. 1 shows a flowchart of a method for controlling an application according to an embodiment of the present disclosure.
FIG. 2 shows a schematic diagram of a method for controlling an application according to an embodiment of the present disclosure.
FIG. 3 shows a flowchart of a method for controlling an application according to an embodiment of the present disclosure.
FIG. 4 shows a schematic diagram of a method for controlling an application according to an embodiment of the present disclosure.
FIG. 5 shows a flowchart of a method for controlling an application according to an embodiment of the present disclosure.
FIG. 6 shows a flowchart of a method for controlling an application according to an embodiment of the present disclosure.
FIG. 7 shows a schematic diagram of a method for controlling an application according to an embodiment of the present disclosure.
FIG. 8 shows a schematic diagram of a method for controlling an application according to an embodiment of the present disclosure.
FIG. 9 shows a block diagram of a device for controlling an application according to an embodiment of the present disclosure.
FIG. 10 shows a block diagram of an electronic device according to an embodiment of the present disclosure.

### DETAILED DESCRIPTION

Example embodiments will be described in detail herein, examples of which are illustrated in the accompanying drawings. When the following description refers to the drawings, the same numbers in different drawings refer to the same or similar elements unless otherwise indicated. The implementations described in the following example embodiments do not represent all implementations consistent with the present disclosure. Rather, they are merely examples of apparatuses and methods consistent with certain aspects of the present disclosure as set forth in the appended claims.

At present, there are two main manners to enter a small window mode or a full screen mode: a button manner and a gesture manner.

The button manner is to provide a user with a button, and when the user clicks the button, a system receives a corresponding event of pressing the button, and activates a function of entering the small window mode or entering the full screen mode.

The gesture manner is to recognize a user's gesture and then activate the function of entering the small window mode or entering the full screen mode. For example, an electronic device can make an application enter the small window mode by recognizing a user's sliding-up gesture. When the user slides up the application, the electronic device receives a large number of touch events, and these touch events are combined into an event sequence: Down, Move, Move.....Up, where Down represents an event that a finger of the user touches a screen, Move represents an event that the finger of the user moves on the screen, and Up represents an event that the finger of the user leaves the screen. Since each of Down, Move and Up events contains coordinate information and records a position where the finger touches the screen, the user's gesture may be recognized based on the coordinate information. A common recognition manner is to connect coordinate points corresponding to a first Move event and the Down event into a line, and if an included angle between the connection line and a horizontal direction is between 45° and 135°, the user's gesture is regarded as the sliding-up gesture.

In the related arts, when switching between the small window mode and the full screen mode is performed, switching gestures, switching touch manners or the like are relatively complicated, and various operation manners are not vividly associated with a change in a display state (a display window size) of an application. Every time switching between the small window mode and the full screen mode of the application, the user needs to first think about what kind of operation gesture corresponds to what kind of adjustment manner. Before using this switching function, the user needs to go through a long learning and familiarization process. The learning cost of the user is relatively high, which puts a burden on the user and results in poor user experience.

In order to solve the above problems, the present disclosure provides a method for controlling an application, which tracks the number of touch points acting on a screen by user's fingers and motion processes of the touch points. If a display state of the application is a first mode of which a display window is larger than that of a small window mode, and the number of touch points satisfies a preset requirement and the plurality of touch points are in an inward retraction motion, the display state of the application is switched from the first mode to the small window mode. If the display state of the application is the small window mode, the number of touch points satisfies the preset requirement and the plurality of touch points are in an outward expansion motion, the display state of the application is switched from the small window mode to the first mode. The inward retraction motion of the touch point is similar to a switching process of switching the first mode to the small window mode in terms of state change, and the outward expansion motion of the touch point is similar to a switching process of switching the small window mode to the first mode in terms of state change, thus when the user uses the finger to perform a touch operation on the screen, the user can quickly think of how to use the finger to operate on the screen according to the switching process the user wants to perform on the display state of the application, which reduces the user's learning cost, achieves a better interaction between the user and the electronic device and improves the usage experience of the user.

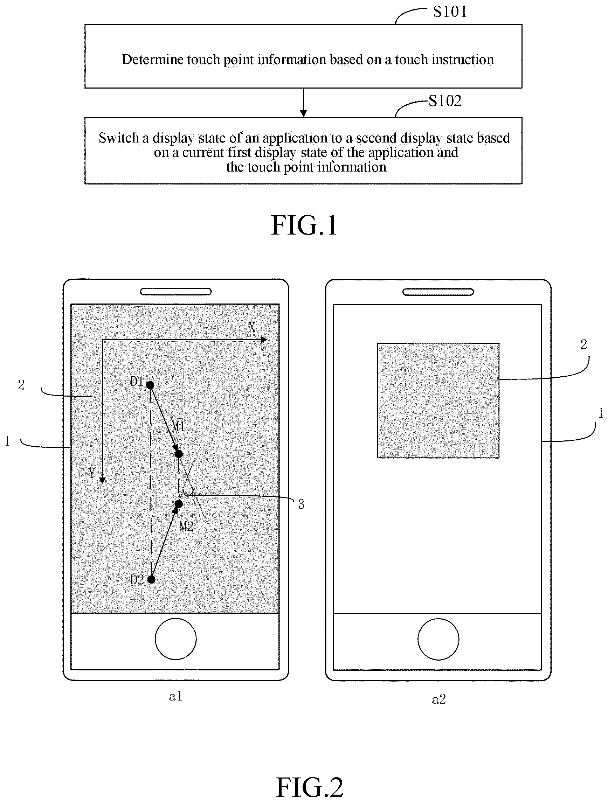

Embodiments of the present disclosure provide a method for controlling an application, which is applied to an electronic device. The electronic device may be a smart electronic device installed with an application such as a mobile phone, a tablet, a smart wearable device. As shown in FIG. 1, the method for controlling the application shown in the present disclosure includes steps S101 and S102.

In the step S101, based on a touch instruction, touch point information is determined.

In the step S 102, based on a current first display state of the application and the touch point information, a display state of the application is switched to a second display state.

A mode involved in the present disclosure will be described first. A first mode refers to a display mode of which a display window is larger than that of a small window mode. In an example, for a candy bar phone, the first mode may be a full screen mode. In another example, for an electronic device with an upper and lower foldable screen, the display window of the first mode in a display state may be a display window occupying an upper screen or a lower screen, or may also be a display window occupying both the upper screen and the lower screen. In yet another example, for an electronic device with a left and right foldable screen, the display window of the first mode in the display state may be a display window occupying a left screen or a right screen, or may also be a display window occupying both the left screen and the right screen. In order to facilitate the description of the technical solution, the first mode is directly described as the full screen mode in the following description. However, it can be understood that the first mode may also be a display mode in the electronic device with the foldable screen as pointed out in the above example.

In the step S101, a control device always maintains a communication connection with the screen to obtain the touch instruction acting on the screen by the user. When the user operates on the screen by using the finger or a stylus, a fingertip or a pen tip exerts a pressure on the screen to achieve an input effect. Therefore, the screen may receive the touch operation of the user, and transmit the touch instruction corresponding to the touch operation to the control device for the subsequent control device to determine the display state of the application based on the touch instruction. The control device is a control chip of the electronic device, which has data processing functions, as well as information and instruction transceiving functions, etc. For example, the control device may include a determination module configured to communicate with a structure such as the screen, determine the touch point information, etc. The control device includes a control device for the application involved in the following. It can be understood that in some cases, when it comes to a plurality of touch points acting on the screen, the finger and the stylus may be used together for operation to exert a plurality of pressure positions on the screen at the same time to form a plurality of touch points.

Since the touch operation acting on the screen by the user includes three actions of the finger leaving the screen (the Up event), the finger approaching and touching the screen (the Down event) and the finger moving on the screen (the Move event), each action corresponds to an event, and each event includes coordinate information, the control device may determine the touch point information based on the received touch instruction including an event sequence. The touch point information includes the number of touch points and motion information of each touch point. The control device may determine the number of touch points based on the number of Down events, and determine the motion information of the touch point based on the Move event and the Up event, the motion information includes a motion direction and a motion length of the touch point, etc. For example, as shown in FIG.2, the user uses the index finger and thumb to perform the touch operation on a screen 1, forming a motion trajectory as shown in a1 of FIG. 2. The user's two fingers touch the screen 1 at D1 and D2, respectively, triggering a Down event, then respectively move from D1 to M1 and from D2 to M2, triggering a Move event, and finally leave the screen 1 at M1 and M2, respectively, triggering an Up event. The control device determines, based on the event sequence, that there are two touch points and motion directions of the touch points are a direction in which D1 points to M1 and a direction in which D2 points to M2 in a1 of FIG. 2, and motion lengths of the touch points are a length of a line segment D1M1 and a length of a line segment D2M2 in a1 of FIG. 2.

In the step S102, the control device uses the current display state of the application as the first display state, and uses the switched display state as the second display state. The display state of the application includes the small window mode and the full screen mode. If the application is currently in the small window mode and the touch point information represents the user's intention to enlarge the application to a full screen display, the control device switches the display state of the application to the full screen mode. If the application is currently in the full screen mode and the touch point information represents the user's intention to shrink the application to a partial screen display, the control device switches the display state of the application to the small window mode. As shown in a1 of FIG. 2, a display area 2 of the application is displayed in the full screen mode on the screen 1. The control device determines that the current touch point information represents the user's intention to shrink the display area 2 of the application to be partially displayed on the screen 1, then the control device shrinks the display area 2 of the application and switches to the small window mode. A final display state of the display area 2 of the application is as shown in a2 of FIG. 2.

In the present disclosure, the electronic device determines the touch point information based on the touch instruction; and based on the touch point information, completes the switching of the application from the small window mode to the first mode (e.g., the full screen mode) of which display window is larger than that of the small window mode, or from the first mode to the small window mode. The touch point information represents the motion state of the touch point, and the motion state of the touch point can be vividly associated with a change in the size of the display window, thus by associating the motion manner of the touch point with the switching process of the display state of the application, the user's learning cost is reduced, and it is convenient for the user to adjust the display state of the application intuitively and quickly. Moreover, since the manner to enter the small window mode and the first mode is simple, it conforms to the user's operation intuition, enhances an interaction effect between the user and the electronic device, and improves the usage experience of the user.

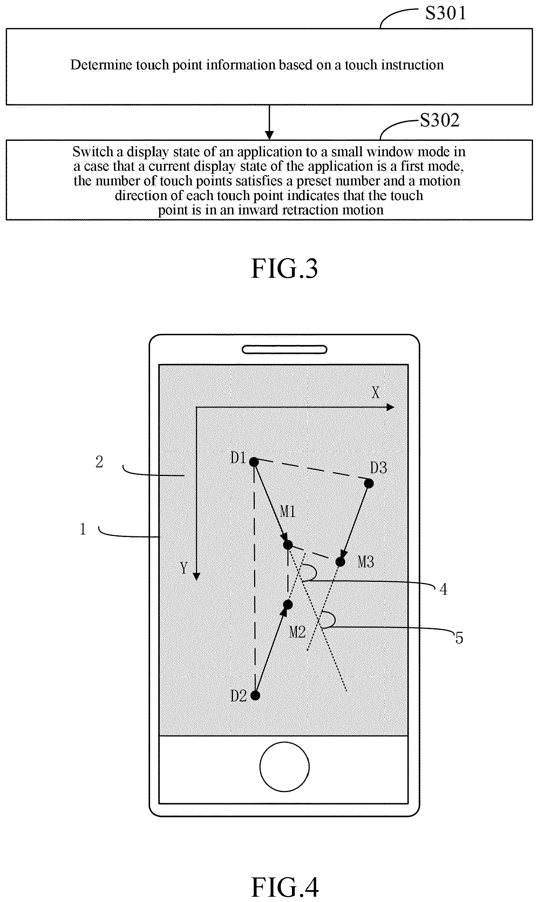

According to an embodiment of the present disclosure, as shown in FIG. 3, the method for controlling the application in the embodiment of the present disclosure includes steps S301 and S302.

In the step S301, based on a touch instruction, touch point information is determined.

In the step S302, in a case that a current display state of the application is a first mode, the number of touch points satisfies a preset number and a motion direction of each touch point indicates that the touch point is in an inward retraction motion, a display state of the application is switched to a small window mode.

An implementation of the step S301 is the same as the implementation in the above embodiments, and will not be described again here.

In the step S302, due to the portability of the electronic device, a screen size of the electronic device has limitations. For the convenience of operation, the user typically chooses to use one finger, two fingers or three fingers to touch the screen for operation. In addition, a single finger operation is usually used for an instantaneous operation, and using the single finger operation to change the display state of the application is not in line with a user's usage habit. Therefore, the control device sets the preset number to 2 and 3, that is, the user may use a two-finger operation or a three-finger operation to change the display state of the application. In a case that the current display state of the application is the first mode (e.g., the full screen mode), if the control device determines that the number of touch points in the touch information of the user is 2 or 3, and the motion direction of each touch point indicates that the touch point is in the inward retraction motion, the control device switches the display state of the application to the small window mode. As shown in FIG. 2, in a1 of FIG. 2, the display area 2 of the application is displayed in the full screen mode on the screen 1. When determining that the touch point is in the inward retraction motion, the control device shrinks the display area 2 of the application to be displayed at a partial position on the screen 1. A final display state of the display area 2 of the application is shown in a2 of FIG. 2.

In some embodiments, the number of touch points is two, and the touch points include a first touch point and a second touch point. The first touch point has a first starting position and a first target position during motion, and the second touch point has a second starting position and a second target position during the motion.

The touch point is in the inward retraction motion in a case that the following conditions are satisfied:
a first condition of an included angle between an extension line of a connection line between the first starting position and the first target position and an extension line of a connection line between the second starting position and the second target position being greater than a first preset angle; and
a second condition of a product of a difference along a reference direction between the first target position and the first starting position and a difference along the reference direction between the second target position and the second starting position being negative, and a distance between the first starting position and the second starting position being greater than a distance between the first target position and the second target position.

When the user uses two fingers for operation, the control device determines that the number of touch points is two, and uses one of the touch points as the first touch point, and the other touch point as the second touch point. Since the touch operation of the user includes processes of touching the screen (the Down event) and moving on the screen (the Move event), each touch point has a corresponding starting position and target position. The starting position is a position where the user touches the screen (the Down event), and the target position is a final position of the movement of the user's finger on the screen (the Move event). When the touch point information of the first touch point and the second touch point satisfies the following conditions, the control device determines that the touch points are in the inward retraction motion and switches the application to the small window mode.

The first condition is that the included angle between the extension line of the connection line between the first starting position and the first target position of the first touch point and the extension line of the connection line between the second starting position and the second target position of the second touch point is greater than the first preset angle. The first preset angle may be set according to a user's usage habit. For example, the first preset angle may be set to 30°, 40°, 45°, etc. As shown in a1 of FIG. 2, the first starting position of the first touch point is D1, the first target position of the first touch point is M1, the second starting position of the second touch point is D2, and the second target position of the second touch point is M2. A connection line between D1 and M1 is the connection line between the first starting position and the first target position. A connection line between D2 and M2 is the connection line between the second starting position and the second target position. One of included angles formed by an extension line of a line segment D1M1 and an extension line of a line segment D2M2 includes an included angle 3. Since the included angle 3 is greater than the first preset angle of 30°, the first condition is satisfied.

The second condition is that the product of the difference along the reference direction between the first target position and the first starting position and the difference along the reference direction between the second target position and the second starting position is negative, and the distance between the first starting position and the second starting position is greater than the distance between the first target position and the second target position. The reference direction is a horizontal direction or a vertical direction of the electronic device, that is, a horizontal x-axis direction or a vertical y-axis direction shown in a1 of FIG. 2. The difference comparison and the distance comparison in the second condition may be performed through the calculation of coordinates of the starting position and the target position. As shown in a1 of FIG. 2, in a x-y coordinate system, coordinates of the first starting position of the first touch point are (D1x, D1y), coordinates of the first target position of the first touch point are (M1x, M1y), and coordinates of the second starting position of the second touch point are (D2x, D2y), coordinates of the second target position of the second touch point are (M2x, M2y). If the reference direction is set to the vertical y-axis direction, the difference along the reference direction between the first target position and the first starting position is M1y-D1y, and the difference along the reference direction between the second target position and the second starting position is M2y-D2y. M1y>D1y and M2y<D2y, thus M1y-D1y>0, M2y-D2y<0, and (M1y-D1y)(M2y-D2y)<0. The distance between the first starting position and the second starting position is d_{D1D2}, and the distance between the first target position and the second target position is d_{M1M2}, it can be known based on a1 of FIG. 2 that d_{D1D2} > d_{M1M2}, that is, the second condition is satisfied.

In some embodiments, the number of touch points is three, and the touch points are in the inward retraction motion in a case that the following conditions are satisfied:
a third condition of existence of an included angle greater than a second preset angle among a plurality of included angles formed by intersection of motion directions of any two touch points; and
a fourth condition of a distance between starting positions of any two touch points being greater than a distance between target positions of the two touch points during motion.

When the user operates with three fingers, the control device determines that the number of touch points is three. Since the touch operation of the user includes processes of touching the screen (the Down event) and moving on the screen (the Move event), each touch point has a corresponding starting position and target position. The starting position is a position where the user touches the screen (the Down event), and the target position is a final position of the movement of the user's finger on the screen (the Move event). When the touch point information of any two of the three touch points satisfies the following conditions, the control device determines that the touch points are in the inward retraction motion and switches the application to the small window mode.

The third condition is that there exists the included angle greater than the second preset angle among the plurality of included angles formed by intersection of motion directions of any two touch points, that is, as long as one of the included angles formed by intersection of motion trajectories of the three touch points is greater than the second preset angle, the third condition is satisfied. The second preset angle is different from the first preset angle and is usually set to a value greater than 90°. For example, the second preset angle may be set to 90°, 100°, 105°, etc. As shown in FIG. 4, a first starting position of a first touch point is D1, a first target position of the first touch point is M1, a second starting position of a second touch point is D2, and a second target position of the second touch point is M2, a third starting position of a third touch point is D3, and a third target position of the third touch point is M3. A connection line between D1 and M1 is a connection line between the first starting position and the first target position. A connection line between D2 and M2 is a connection line between the second starting position and the second target position. A connection line between D3 and M3 is a connection line between the third starting position and the third target position. A line segment D2M2 and a line segment D3M3 are parallel to each other and do not have an included angle. A line segment D1M1 is not parallel to the line segment D2M2 and the line segment D3M3. The line segment D1M1 intersects with the line segment D2M2 and the line segment D3M3 to form a plurality of included angles. One (included angle 4) of included angles formed by intersection of extension lines of the line segment D1M1 and the line segment D2M2 is greater than the second preset angle of 30°, that is, the third condition is satisfied. One (included angle 5) of included angles formed by intersection of extension lines of the line segment D1M1 and the line segment D3M3 is greater than the second preset angle of 30°, that is, the third condition is satisfied. The above-mentioned included angle 4 and included angle 5 are only explained as examples. As long as one included angle among all included angles formed by the intersection of the motion directions of the touch points in FIG. 4 is greater than the second preset angle, the third condition is satisfied.

The fourth condition is that the distance between the starting positions of any two touch points is greater than the distance between the target positions of the two touch points during the motion. As shown in FIG. 4, a distance between starting positions of the first touch point and the second touch point is d_{D1D2}, a distance between target positions of the first touch point and the second touch point is d_{M1M2}, a distance between starting positions of the first touch point and the third touch point is d_{D1D3}, and a distance between target positions of the first touch point and the third touch point is d_{M1M3}. It can be known based on FIG. 4 that d_{D1D2}>d_{M1M2}, d_{D1D3}>d_{M1M3}, and then it can be determined that the fourth condition is satisfied.

In the present disclosure, when the application is displayed in the first mode of which the display window is larger than that of the small window mode, the user may use two or three fingers to change the display state of the application. If the control device determines that the touch point is in the inward retraction motion, it switches the application to the small window mode for display, which is simple to operate. Since the inward retraction motion indicates shrinking an object, and switching the application from the first mode to the small window mode is also a shrinking process, the operation is intuitive and in line with the user's psychological expectations, which reduces the learning cost of the user.

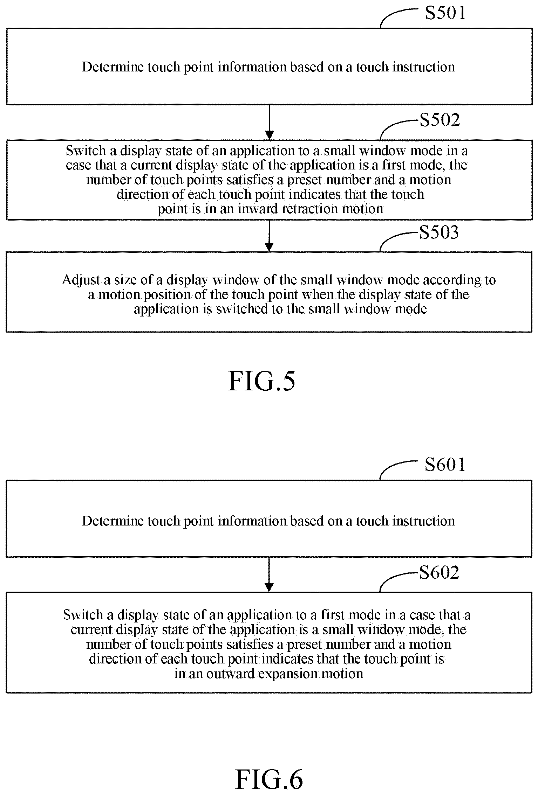

According to an embodiment of the present disclosure, as shown in FIG. 5, the method for controlling the application in the embodiment of the present disclosure includes steps S501 to S503.

In the step S501, based on a touch instruction, touch point information is determined.

In the step S502, in a case that a current display state of the application is a first mode, the number of touch points satisfies a preset number and a motion direction of each touch point indicates that the touch point is in an inward retraction motion, a display state of the application is switched to a small window mode.

In the step S503, when the display state of the application is switched to the small window mode, a size of a display window of the small window mode is adjusted according to a motion position of the touch point.

Implementations of the steps S501 and S502 are the same as the implementations in the above-mentioned embodiments, and will not be described again here.

In the step S503, when the user uses two or three fingers to move on the screen, the control device will receive a Move event, and the Move event includes position information of the touch point movement. After the application is switched to the small window mode, the control device may adjust the size of the display window of the small window mode according to position information corresponding to the motion position of the touch point. The size of the display window is positively related to a motion amplitude of the touch point. If the motion amplitude of the touch point is large, an adjustment amplitude of the display window is large, and if the motion amplitude of the touch point is small, the adjustment amplitude of the display window is small. When the user's finger leaves the screen, that is, the control device receives an Up event, the control device will fixedly display the small window mode of the application according to the adjusted display window size. In addition, the control device may also display the small window mode of the application with a display window size set by default, to prevent the application from being too small to affect the user's use due to the user's misoperation. In a case that the user changes the display state of the application from the first mode to the small window mode through a multi-finger touch operation, and the display window size of the small window mode has been adjusted to a size satisfactory to the user, the user can use a single finger to press the screen in the display window and perform a sliding operation if wanting to move a position of the small window. The display window will move as the touch point of the finger moves, making it easier for the user to adjust the position of the display window on the screen.

It can be understood that when the user uses two or three fingers to adjust the display state of the application, that is, adjust from the first mode to the small window mode, the user may simultaneously move two fingers up, down, left, right and other directions during adjusting the size of the display window, so as to adjust the position of the display window on the screen while adjusting the size of the display window.

In the present disclosure, when the application is displayed in the small window mode, the control device may adjust the size of the display window in the small window mode based on the motion position of the touch point. That is, a manner to enter the small window mode is the same as a manner to adjust the size of the display window, and the user does not need to specially learn how to adjust the size of the display window, which reduces the user's learning cost, is simple to operate and improves the usage experience of the user.

According to an embodiment of the present disclosure, as shown in FIG. 6, the method for controlling the application in the embodiment of the present disclosure includes steps S601 and S602.

In the step S601, based on a touch instruction, touch point information is determined.

In the step S602, in a case that a current display state of the application is a small window mode, the number of touch points satisfies a preset number and a motion direction of each touch point indicates that the touch point is in an outward expansion motion, a display state of the application is switched to a first mode.

An implementation of the step S601 is the same as the implementation in the above embodiments, and will not be described again here.

In the step S602, the control device sets the preset number to 2 and 3, that is, the user may use a two-finger operation or a three-finger operation to change the display state of the application. In a case that the current display state of the application is the small window mode, if the control device determines that the number of touch points in the touch information of the user is 2 or 3, and the motion direction of each touch point indicates that the touch point is in the outward expansion motion, the control device will switch the display state of the application to the first mode of which the display window is larger than that of the small window mode.

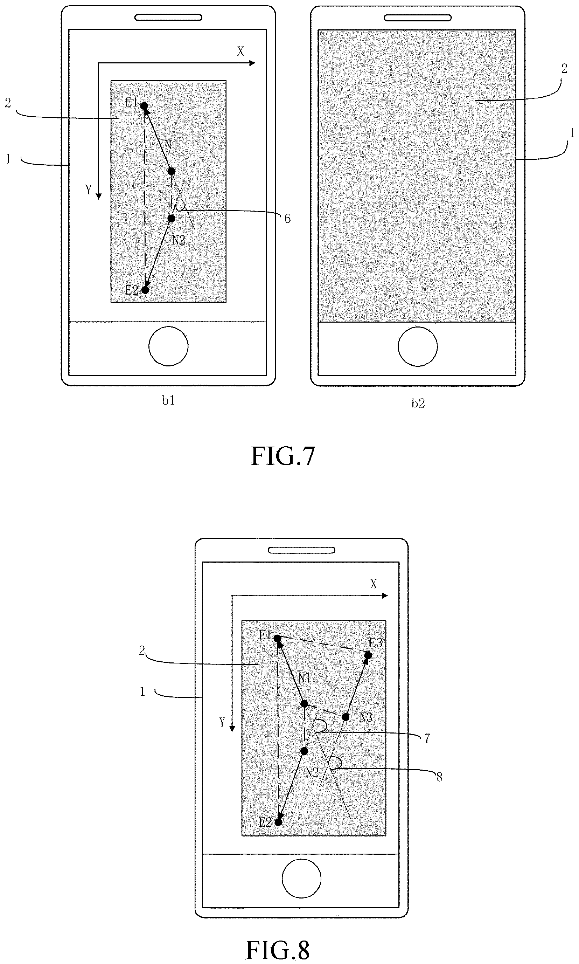

In an example, in order to clarify the user's operation intention and prevent the misoperation, the outward expansion motion of the touch point needs to be performed in the display window configured to display the application on the screen, that is, a pressing operation of the user's finger needs to fall into the display window of the small window mode. As shown in FIG. 7, in b 1 of FIG. 7, a display area 2 of an application is displayed in the small window mode on a screen 1. When determining that the touch point is in the outward expansion motion, the control device enlarges the display area 2 of the application to be in the full screen display on the screen 1. A final display state of the display area 2 of the application is shown in b2 of FIG. 7.

In another example, in order to facilitate the user operation, the outward expansion motion of the touch point also does not need to be performed in the display window configured to display the application on the screen, that is, the outward expansion motion of the touch point may be performed in other areas of the screen except the small window display area, and it is also possible to change the display state of the application from the small window mode to the first mode.

In some embodiments, the number of touch points is two, and the touch points include a first touch point and a second touch point. The first touch point has a first starting position and a first target position during motion, and the second touch point has a second starting position and a second target position during the motion.

The touch point is in the outward expansion motion in a case that the following conditions are satisfied:
a fifth condition of an included angle between an extension line of a connection line between the first starting position and the first target position and an extension line of a connection line between the second starting position and the second target position being greater than a third preset angle; and
a sixth condition of a product of a difference along a reference direction between the first target position and the first starting position and a difference along the reference direction between the second target position and the second starting position being negative, and a distance between the first starting position and the second starting position being smaller than a distance between the first target position and the second target position.

When the user uses two fingers for operation, the control device determines that the number of touch points is two, and uses one of the touch points as the first touch point, and the other touch point as the second touch point. Since the touch operation of the user includes processes of touching the screen (the Down event) and moving on the screen (the Move event), each touch point has a corresponding starting position and target position. The starting position is a position where the user touches the screen (the Down event), and the target position is a final position of the movement of the user's finger on the screen (the Move event). When the touch point information of the first touch point and the second touch point satisfies the following conditions, the control device determines that the touch points are in the outward expansion motion and switches the application to the first mode of which the display window is larger than that of the small window mode.

The fifth condition is that the included angle between the extension line of the connection line between the first starting position and the first target position of the first touch point and the extension line of the connection line between the second starting position and the second target position of the second touch point is greater than the third preset angle. The third preset angle may remain the same as the first preset angle, or may be set according to the user's usage habit. For example, the third preset angle may be set to 30°, 40°, 45°, etc. As shown in b1 of FIG. 7, the first starting position of the first touch point is N1, the first target position of the first touch point is E1, the second starting position of the second touch point is N2, and the second target position of the second touch point is E2. A connection line between N1 and E1 is the connection line between the first starting position and the first target position. A connection line between N2 and E2 is the connection line between the second starting position and the second target position. One of included angles formed by extension lines of a line segment N1E1 and a line segment N2E2 includes an included angle 6. Since the included angle 6 is greater than the third preset angle of 30°, the fifth condition is satisfied.

The sixth condition is that the product of the difference along the reference direction between the first target position and the first starting position and the difference along the reference direction between the second target position and the second starting position is negative, and the distance between the first starting position and the second starting position is smaller than the distance between the first target position and the second target position. The reference direction is the horizontal direction or the vertical direction of the electronic device, that is, a horizontal x-axis direction or a vertical y-axis direction shown in b1 of FIG. 7. The difference comparison and the distance comparison in the sixth condition may be performed through the calculation of coordinates of the starting position and the target position. As shown in b1 of FIG. 7, in a x-y coordinate system, coordinates of the first starting position of the first touch point are (N1x, N1y), coordinates of the first target position of the first touch point are (E1x, E1y), and coordinates of the second starting position of the second touch point are (N2x, N2y), coordinates of the second target position of the second touch point are (E2x, E2y). If the reference direction is set to the vertical y-axis direction, the difference along the reference direction between the first target position and the first starting position is E1y-N1y, and the difference along the reference direction between the second target position and the second starting position is E2y-N2y. E1y<N1y and E2y>N2y, thus E1y-N1y<0, E2y-N2y>0, and (E1y-N1y)(E2y-N2y)<0. The distance between the first starting position and the second starting position is d_{N1N2}, and the distance between the first target position and the second target position is d_{E1E2}, it can be known based on b1 of FIG. 7 that d_{N1N2} <d_{E1E2}, that is, the sixth condition is satisfied.

In some embodiments, the number of touch points is three, and the touch points are in the outward expansion motion in a case that the following conditions are satisfied:
a seventh condition of existence of an included angle greater than a fourth preset angle among a plurality of included angles formed by intersection of motion directions of any two touch points; and
an eighth condition of a distance between starting positions of any two touch points being smaller than a distance between target positions of the two touch points during motion.

When the user operates with three fingers, the control device determines that the number of touch points is three. Since the touch operation of the user includes processes of touching the screen (the Down event) and moving on the screen (the Move event), each touch point has a corresponding starting position and target position. The starting position is a position where the user touches the screen (the Down event), and the target position is a final position of the movement of the user's finger on the screen (the Move event). When the touch point information of any two of the three touch points satisfies the following conditions, the control device determines that the touch points are in the outward expansion motion and switches the application to the first mode.

The seventh condition is that there exists the included angle greater than the fourth preset angle among the plurality of included angles formed by intersection of motion directions of any two touch points, that is, as long as one of the included angles formed by intersection of motion trajectories of the three touch points is greater than the fourth preset angle, the seventh condition is satisfied. The fourth preset angle may be set the same as the second preset angle, and is usually set to a value greater than 90°. For example, the fourth preset angle may be set to 90°, 100°, 105°, etc. As shown in FIG. 8, a first starting position of a first touch point is N1, a first target position of the first touch point is E1, a second starting position of a second touch point is N2, and a second target position of the second touch point is E2, a third starting position of a third touch point is N3, and a third target position of the third touch point is E3. A connection line between N1 and E1 is a connection line between the first starting position and the first target position. A connection line between N2 and E2 is a connection line between the second starting position and the second target position. A connection line between N3 and E3 is a connection line between the third starting position and the third target position. A line segment N2E2 and a line segment N3E3 are parallel to each other and do not have an included angle. Aline segment N1E1 is not parallel to the line segment N2E2 and the line segment N3E3. An extension line of the line segment N1E1 intersects with the extension lines of the line segment N2E2 and the line segment N3E3 to form a plurality of included angles. An included angle 7 formed by extension lines of the line segment N1E1 and the line segment N2E2 is greater than the fourth preset angle of 30°, that is, the seventh condition is satisfied. An included angle 8 formed by extension lines of the line segment N1E1 and the line segment N3E3 is greater than the fourth preset angle of 30°, that is, the seventh condition is satisfied. The above-mentioned included angle 7 and included angle 8 are only explained as examples. As long as one included angle among all included angles formed by the intersection of the motion directions of the touch points in FIG. 8 is greater than the fourth preset angle, the seventh condition is satisfied.

The eighth condition is that the distance between starting positions of any two touch points is smaller than the distance between target positions of the two touch points during the motion. As shown in FIG. 8, a distance between starting positions of the first touch point and the second touch point is d_{N1N2}, a distance between target positions of the first touch point and the second touch point is d_{E1E2}, a distance between starting positions of the first touch point and the third touch point is d_{N1N3}, and a distance between target positions of the first touch point and the third touch point is d_{E1E3}. It can be known based on FIG. 8 that d_{N1N2}<d_{Ei1E2}, d_{N1N3} < d_{E1E3}, and then it can be determined that the eighth condition is satisfied.

In the present disclosure, when the application is displayed in the small window mode, the user can use two or three fingers to change the display state of the application. If determining that the touch point is in the outward expansion motion, the control device switches the application to the first mode for display, which is simple to operate. Since the outward expansion motion indicates enlarging the object, and switching the application from the small window mode to the first mode with a display window larger than that of the small window mode is also a magnification process, the operation is intuitive and in line with the user's psychological expectations. Since the inward retraction motion and the outward expansion motion are similar operation manners and are simple to operate, the user does not need to memorize the operation manners separately, which reduces the user's learning cost.

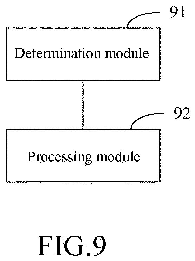

Embodiments of the present disclosure provide a device for controlling an application, which is applied to an electronic device. FIG. 9 shows a block diagram of a device for controlling an application in the present disclosure.

The device for controlling the application includes: a determination module 91 and a processing module 92. The determination module 91 is configured to determine touch point information based on a touch instruction, the touch point information includes the number of touch points and motion information of each touch point, and the motion information of the touch point is configured to characterize a motion state of the touch point. The processing module 92 is configured to switch a display state of the application to a second display state based on a current first display state of the application and the touch point information, one of the first display state and the second display state is a small window mode, and the other is a first mode, and a display window of the first mode is larger than a display window of the small window mode.

In an embodiment of the present disclosure, the processing module 92 is further configured to switch the display state of the application to the small window mode in a case that a current display state of the application is the first mode, the number of touch points satisfies a preset number and a motion direction of each touch point indicates that the touch point is in an inward retraction motion.

In an embodiment of the present disclosure, the determination module 91 is further configured to determine that:
the number of touch points is two, the touch points include a first touch point and a second touch point, the first touch point has a first starting position and a first target position during motion, and the second touch point has a second starting position and a second target position during the motion; and:
the touch point is in the inward retraction motion in a case that the following conditions are satisfied:
a first condition of an included angle between an extension line of a connection between the first starting position and the first target position and an extension line of a connection between the second starting position and the second target position being greater than a first preset angle; and
a second condition of a product of a difference along a reference direction between the first target position and the first starting position and a difference along the reference direction between the second target position and the second starting position being negative, and a distance between the first starting position and the second starting position being greater than a distance between the first target position and the second target position, and the reference direction is a horizontal direction or a vertical direction of the electronic device.

In an embodiment of the present disclosure, the determination module 91 is further configured to determine that the number of touch points is three, and the touch point is in the inward retraction motion in a case that the following conditions are satisfied:
a third condition of existence of an included angle greater than a second preset angle among a plurality of included angles formed by intersection of motion directions of any two touch points; and
a fourth condition of a distance between starting positions of any two touch points being greater than a distance between target positions of the two touch points during motion.

In an embodiment of the present disclosure, the processing module 92 is further configured to adjust a size of the display window of the small window mode according to a motion position of the touch point, after the display state of the application is switched to the small window mode.

In an embodiment of the present disclosure, the processing module 92 is further configured to switch the display state of the application to the first mode in a case that a current display state of the application is the small window mode, the number of touch points satisfies a preset number and a motion direction of each touch point indicates that the touch point is in an outward expansion motion.

In an embodiment of the present disclosure, the determination module 91 is further configured to determine that:
the number of touch points is two, the touch points include a first touch point and a second touch point, the first touch point has a first starting position and a first target position during motion, and the second touch point has a second starting position and a second target position during the motion; and
the touch point is in the outward expansion motion in a case that the following conditions are satisfied:
a fifth condition of an included angle between an extension line of a connection between the first starting position and the first target position and an extension line of a connection between the second starting position and the second target position being greater than a third preset angle; and
a sixth condition of a product of a difference along a reference direction between the first target position and the first starting position and a difference along the reference direction between the second target position and the second starting position being negative, and a distance between the first starting position and the second starting position being smaller than a distance between the first target position and the second target position, and the reference direction is a horizontal direction or a vertical direction of the electronic device.

In an embodiment of the present disclosure, the determination module 91 is further configured to determine that the number of touch points is three, and the touch point is in the outward expansion motion in a case that the following conditions are satisfied:
a seventh condition of existence of an included angle greater than a fourth preset angle among a plurality of included angles formed by intersection of motion directions of any two touch points; and
an eighth condition of a distance between starting positions of any two touch points being smaller than a distance between target positions of the two touch points during motion.

Regarding the device for controlling the application in the foregoing embodiments, a specific manner in which each module executes operations has been described in detail in embodiments related to the method, and will not be described in detail here.

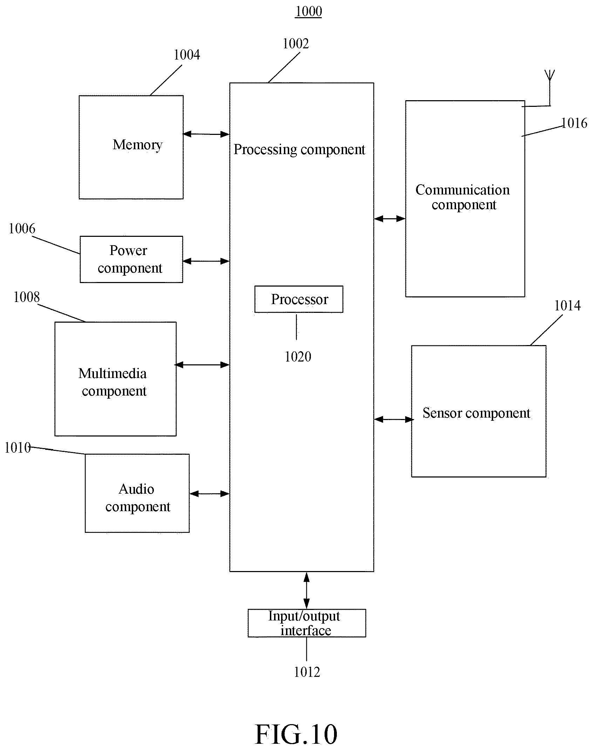

FIG. 10 shows a block diagram of an electronic device 1000 according to an embodiment of the present disclosure. For example, the electronic device 1000 may be a mobile phone, a computer, a digital broadcast terminal, a messaging device, a gaming console, a tablet, a medical device, exercise equipment, a personal digital assistant, etc.

Referring to FIG. 10, the electronic device 1000 may include one or more of the following components: a processing component 1002, a memory 1004, a power component 1006, a multimedia component 1008, an audio component 1010, an input/output (I/O) interface 112, a sensor component 1014, and a communication component 1016.

The processing component 1002 typically controls overall operations of the electronic device 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the electronic device 1000. Examples of such data include instructions for any applications or methods operated on the electronic device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the electronic device 1000. The power component 1006 may include a power management system, one or more power sources, and any other components associated with the generation, management, and distribution of power in the electronic device 1000.

The multimedia component 1008 includes a screen providing an output interface between the electronic device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a duration and a pressure associated with the touch or swipe action. In some embodiments, the multimedia component 1008 includes a front camera and/or a rear camera. The front camera and the rear camera may receive an external multimedia datum while the E electronic device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the electronic device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the electronic device 1000. For instance, the sensor component 1014 may detect an open/closed status of the electronic device 1000, relative positioning of components, e.g., the display and the keypad, of the electronic device 1000, a change in position of the electronic device 1000 or a component of the electronic device 1000, a presence or absence of user contact with the electronic device 1000, an orientation or an acceleration/deceleration of the electronic device 1000, and a change in temperature of the electronic device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the electronic device 1000 and other devices. The electronic device 1000 can access a wireless network based on a communication standard, such as WiFi, 4G, or 5G, or a combination thereof. In one embodiment, the communication component 1016 receives a broadcast signal or broadcast associated information from an external broadcast management system via a broadcast channel. In one embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In embodiments of the present disclosure, the electronic device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In embodiments of the present disclosure, there is further provided a non-transitory computer-readable storage medium including instructions, such as the memory 1004 including instructions executable by the processor 1020 in the electronic device 1000 to complete the above-described method for controlling the application. For example, the non-transitory computer-readable storage medium may be a ROM, a Random Access Memory (RAM), a CD-ROM, a magnetic tape, a floppy disc, an optical data storage device, and the like.

In embodiments of the present disclosure, there is further provided a non-transitory computer-readable storage medium. Instructions in the storage medium, when executed by a processor of an electronic device, enable the processor of the electronic device to execute the method for controlling the application provided by embodiments of the present disclosure.

Other embodiments of the disclosure will be apparent to those skilled in the art from consideration of the specification and practice of the disclosure disclosed here. It is intended that the specification and examples be considered as exemplary only, with a true scope and spirit of the disclosure being indicated by the following claims.

## Claims

1. A method for controlling an application, performed by an electronic device, and comprising:
determining (S101) touch point information based on a touch instruction, wherein the touch point information comprises a number of touch points and motion information of each touch point, and the motion information of the touch point is configured to characterize a motion state of the touch point; and
switching (S102) a display state of the application to a second display state based on a current first display state of the application and the touch point information, wherein a first one of the first display state and the second display state is a small window mode, and a second one of the first display state and the second display state is a first mode, and a display window of the first mode is larger than a display window of the small window mode.

2. The method according to claim 1, wherein the switching (S102) the display state of the application to the second display state based on the current first display state of the application and the touch point information comprises:
switching (S302) the display state of the application to the small window mode in a case that a current display state of the application is the first mode, the number of touch points satisfies a preset number and a motion direction of each touch point indicates that the touch point is in an inward retraction motion.

3. The method according to claim 2, wherein the number of touch points satisfying the preset number and the motion direction of each touch point indicating that the touch point is in the inward retraction motion comprise:
the number of touch points is two, the touch points comprise a first touch point and a second touch point, the first touch point has a first starting position and a first target position during motion, and the second touch point has a second starting position and a second target position during the motion; and
the touch point is in the inward retraction motion in a case that the following conditions are satisfied:
a first condition of an included angle between an extension line of a connection line between the first starting position and the first target position and an extension line of a connection line between the second starting position and the second target position being greater than a preset angle; and
a second condition of a product of a difference along a reference direction between the first target position and the first starting position and a difference along the reference direction between the second target position and the second starting position being negative, and a distance between the first starting position and the second starting position being greater than a distance between the first target position and the second target position, wherein the reference direction is a horizontal direction or a vertical direction of the electronic device.

4. The method according to claim 2, wherein the number of touch points satisfying the preset number and the motion direction of each touch point indicating that the touch point is the an inward retraction motion comprise:
the number of touch points is three, and the touch point is in the inward retraction motion in a case that the following conditions are satisfied:
a first condition of existence of an included angle greater than a preset angle among a plurality of included angles formed by intersection of motion directions of any two touch points; and
a second condition of a distance between starting positions of any two touch points being greater than a distance between target positions of the two touch points during motion.

5. The method according to any one of claims 2 to 4, further comprising:
adjusting (S503) a size of the display window of the small window mode according to a motion position of the touch point, in a case that the display state of the application is switched to the small window mode.

6. The method according to any one of the preceding claims, wherein the switching (S102) the display state of the application to the second display state based on the current first display state of the application and the touch point information comprises:
switching (S602) the display state of the application to the first mode in a case that a current display state of the application is the small window mode, the number of touch points satisfies a preset number and a motion direction of each touch point indicates that the touch point is in an outward expansion motion.

7. The method according to claim 6, wherein the number of touch points satisfying the preset number and the motion direction of each touch point indicating that the touch point is in the outward expansion motion comprise:
the number of touch points is two, the touch points comprise a first touch point and a second touch point, the first touch point has a first starting position and a first target position during motion, and the second touch point has a second starting position and a second target position during the motion; and
the touch point is in the outward expansion motion in a case that the following conditions are satisfied:
a first condition of an included angle between an extension line of a connection line between the first starting position and the first target position and an extension line of a connection line between the second starting position and the second target position being greater than a preset angle; and
a second condition of a product of a difference along a reference direction between the first target position and the first starting position and a difference along the reference direction between the second target position and the second starting position being negative, and a distance between the first starting position and the second starting position being smaller than a distance between the first target position and the second target position, wherein the reference direction is a horizontal direction or a vertical direction of the electronic device.

8. The method according to claim 6, wherein the number of touch points satisfying the preset number and the motion direction of each touch point indicating that the touch point is in the outward expansion motion comprise:
the number of touch points is three, and the touch point is in the outward expansion motion in a case that the following conditions are satisfied:
a first condition of existence of an included angle greater than a fourth preset angle among a plurality of included angles formed by intersection of motion directions of any two touch points; and
a second condition of a distance between starting positions of any two touch points being smaller than a distance between target positions of the two touch points during motion.

9. A device for controlling an application, applied to an electronic device, and comprising:
a determination module (91), configured to determine touch point information based on a touch instruction, wherein the touch point information comprises a number of touch points and motion information of each touch point, and the motion information of the touch point is configured to characterize a motion state of the touch point; and
a processing module (92), configured to switch a display state of the application to a second display state based on a current first display state of the application and the touch point information, wherein a first one of the first display state and the second display state is a small window mode, and a second one of the first display state and the second display state is a first mode, and a display window of the first mode is larger than a display window of the small window mode.

10. The device according to claim 9, wherein the processing module (92) is further configured to:
switch the display state of the application to the small window mode in a case that a current display state of the application is the first mode, the number of touch points satisfies a preset number and a motion direction of each touch point indicates that the touch point is in an inward retraction motion.

11. The device method according to claim 10, wherein the number of touch points satisfying the preset number and the motion direction of each touch point indicating that the touch point is in the inward retraction motion comprise:
the number of touch points is two, the touch points comprise a first touch point and a second touch point, the first touch point has a first starting position and a first target position during motion, and the second touch point has a second starting position and a second target position during the motion; and
the touch point is in the inward retraction motion in a case that the following conditions are satisfied:
a first condition of an included angle between an extension line of a connection line between the first starting position and the first target position and an extension line of a connection line between the second starting position and the second target position being greater than a preset angle; and
a second condition of a product of a difference along a reference direction between the first target position and the first starting position and a difference along the reference direction between the second target position and the second starting position being negative, and a distance between the first starting position and the second starting position being greater than a distance between the first target position and the second target position, wherein the reference direction is a horizontal direction or a vertical direction of the electronic device.

12. The device method according to claim 10, wherein the number of touch points satisfying the preset number and the motion direction of each touch point indicating that the touch point is the an inward retraction motion comprise:
the number of touch points is three, and the touch point is in the inward retraction motion in a case that the following conditions are satisfied:
a first condition of existence of an included angle greater than a preset angle among a plurality of included angles formed by intersection of motion directions of any two touch points; and
a second condition of a distance between starting positions of any two touch points being greater than a distance between target positions of the two touch points during motion.

13. The device according to any one of claims 10 to 12, wherein the processing module (92) is further configured to:
adjust a size of the display window of the small window mode according to a motion position of the touch point, in a case that the display state of the application is switched to the small window mode.

14. An electronic device, comprising:
a processor; and
a memory configured to store executable instructions by the processor;
wherein the processor is configured to execute the executable instructions in the memory to implement the method for controlling the application according to any one of claims 1 to 8.

15. A non-transitory computer-readable storage medium having executable instructions stored thereon which, when executed by a processor of an electronic device, cause the electronic device to perform the method for controlling the application according to any one of claims 1 to 8.
